# EUROPÄISCHE PATENTSCHRIFT

(11) **EP 2 140 302 B1**
(45) Veröffentlichungstag und Bekanntmachung des Hinweises auf die Patenterteilung: **28.09.2011**
(21) Anmeldenummer: 08749029.8
(22) Anmeldetag: 21.04.2008
(51) Int. Cl.: G02C 5/00, G02C 5/14

(54) **BRILLENGESTELL**
EYEGLASS FRAME
MONTURE DE LUNETTES

(30) Priorität: 20.04.2007 DE 202007005735 U
(43) Veröffentlichungstag der Anmeldung: 06.01.2010
(73) Patentinhaber: IC! Berlin Brillen GmbH, 10405 Berlin (DE)
(72) Erfinder: LE DUY, Daniell, 13357 Berlin (DE)
(74) Vertreter: Hruschka, Jürgen
(86) Internationale Anmeldenummer: PCT/EP2008/003193
(87) Internationale Veröffentlichungsnummer: WO 2008/128747

(56) Entgegenhaltungen:
- WO-A-2005/116727
- DE-A1-102005 019 850
- DE-U1-202004 007 224

## Beschreibung

Die vorliegende Erfindung betrifft ein Brillengestell, insbesondere ein Brillengestell mit einem schraubenlosen Gelenkmechanismus.

Aus dem Stand der Technik sind unzählige Brillengestelle bekannt, welche unterschiedliche Varianten an Gelenkmechanismen verwenden. Die gängigste Variante basiert auf einem Schamiermechanismus, bei dem am Rahmen bzw. der Fassung Stifte angeordnet sind, die mit einem entsprechenden Gelenkteil, welcher am fassungsseitigen Ende des Bügels angeordnet ist, kooperieren, indem beide Teile ineinander geschoben werden und mittels Spezialschrauben drehbar verbunden werden. Bei den meisten Brillenfassungen, insbesondere bei denjenigen, welche mit Korrekturgläsern verwendet werden sollen, erfolgt das Öffnen und Schließen der Fassungen mittels eines so genannten Schließblocks. Denkbar ist es auch, dass die Gläser unmittelbar an einem Rahmen befestigt werden, indem Schrauben direkt in das Glas geschraubt werden. Bei rahmenlosen Brillen werden die Bügel direkt über ein Ansatzstück mit den Gläsern verschraubt.

Da das Drehgelenk den dynamisch am beanspruchsten Bestandteil eines Brillengestells darstellt, haben mehrere Lösungen der Einfachheit wegen auf ein herkömmliches Drehgelenk verzichtet.

So schlägt die US-Patentschrift Nr. 3,155,982 eine Brille vor, bei welcher die Brillenbügel direkt mit dem vorderen, die Gläser beinhaltenden Fassungsteil zusammenwirken. Hierzu teilt sich das fassungsseitige Ende des Bügels in drei Blattfedern auf, wobei die mittlere Blattfeder an der Außenkante des Fassungsteils anliegt, während die beiden äußeren Blattfedern mit an ihren Enden geformten Haken in Öffnungen eingreifen, die in der Nähe der Außenkante in dem Hauptteil angeordnet sind.

Ein ähnlicher Mechanismus ist aus der französischen Patentschrift Nr. 1009345 bekannt. Bei dem dort offenbarten Brillengestell sind die Bügel an ihren auf die Fassung zulaufenden Enden ebenfalls in drei Blattfedern unterteilt. An der Fassung selbst ist links und rechts ein U-förmiges Ansatzstück vorgesehen, dessen Mittelteil ein Gelenk bildet, in welches das in der Form eines Hakens gebogene Ende der mittleren der drei Blattfedern eingreift. Die beiden äußeren Blattfedern verlaufen auf ihrer ganzen Länge geradlinig, wobei ihre Enden im ausgeklappten Zustand der Bügel mit den Seitenflächen an der dem Brillenträger abgewandten Seite des Ansatzstücks und mit den Stirnflächen an der dem Brillenträger zugewandten Fläche der Brillenfassung zum Anliegen kommen, wodurch die Bügel im ausgeklappten Zustand stabilisiert werden.

Eine einfachere Ausgestaltung wird in der europäischen Patentschrift Nr. 0 863 424 B1 vorgeschlagen, welche die Lösung der Gelenkverbindung bereits in den Rahmen bzw. in die Fassung integriert und welche das Prinzip eines mit drei Blattfedern versehenen Bügels aufnimmt. An der Fassung ist links und rechts jeweils ein Anschlusselement vorgesehen, welches eine obere und eine untere Aussparung aufweist, die eine senkrecht zur Richtung des ausgeklappten Bügels verlaufende Gelenkachse bilden. Im ausgeklappten Zustand der Bügel liegen die äußeren Blattfedern an der dem Gesicht des Brillenträgers zugewandten Fläche des Anschlusselements an und durchgreifen mit an ihren freien Enden vorgesehenen Biegungen die Aussparungen in dem Anschlusselement, während die mittlere Blattfeder an der gegenüberliegenden Fläche des Anschlusselements anliegt. So wird auf einfache Weise ein Gelenk geschaffen, welches unmittelbar an der Fassung angreift und die auf herkömmliche Verbindungsarten wie Schrauben verzichtet. Das Anschlusselement ist dabei zweigeteilt, so dass ein leichtes Auswechseln der Gläser ermöglicht wird. Sämtliche Bestandteile einer solchen Brille sind aus Blech gefertigt. Dieser Mechanismus ist jedoch mit dem Nachteil behaftet, dass die Fassung bzw. der Rahmen aus dem gleichen Material wie die Anschlusselemente hergestellt sein müssen, da diese Anschlusselemente mit dem Rahmen einstückig verbunden sind.

Aus der deutschen Offenlegungsschrift DE 10 2005 019 850 A1 ist ein Brillengestell bekannt, bei welchem je ein Aufnahmeelement zu beiden Seiten des Rahmens vorgesehen ist, welches von zwei Klammern eines Anschlusselements für den Bügel vollständig umgriffen wird, wobei die Klammern in entsprechenden, an den äußeren Flächen des Aufnahmeelements vorgesehenen Nuten aufgenommen sind.

Die Klammern werden in den Nuten abschließend durch eine auf diese aufschiebbare Manschette gehalten, so dass sich die Klammern nicht mehr aus den Nuten selbsttätig lösen können.

Aus der Internationalen Anmeldung WO 2005/116727 ist ein ähnliches Prinzip bekannt. Bei dem darin gezeigten Brillengestell weist das rahmenseitige Ende des Bügels zwei klammerartige Enden auf, die auseinander gezogen werden können. Im zusammengebauten Zustand werden diese Enden durch eine Manschette auf einem Anschlusselement an dem Rahmen gehalten und so miteinander verspannt.

Ausgehend davon ist es die Aufgabe der vorliegenden Erfindung, eine Verbindung zwischen einem Rahmen und Bügeln eines Brillengestells weiterzubilden, welche eine einfache Montage gestattet.

Gelöst wird diese Aufgabe mit einem Brillengestell mit den Merkmalen nach Anspruch 1.

Die Erfindung liegt folglich darin, dass das Aufnahmeelement eine in Richtung zu dem Bügel sich öffnende Ausnehmung aufweist, in die ein Anschlusselement aufgenommen ist, dessen bügelseitiges Ende in Richtung des Bügels im ausgeklappten Zustand weist und das im Vergleich zu der Länge des Bügels relativ kurz ist und an welchem der Bügel schwenkbar angelenkt ist. Das Anschlusselement weist zumindest zwei Einzelteile auf, die so ausgestaltet sind, dass diese im montierten Zustand unter Ausbildung des Anschlusselements durch gegenseitiges Verspannen das Anschlusselement in der Ausnehmung des Aufnahmeelements verliersicher halten.

Unter Verspannen ist hierbei gemeint, dass sich die beiden Einzelteile, wenn diese in der Ausnehmung des Aufnahmeelements vollständig aufgenommen bzw. eingeschoben sind und dabei das Anschlusselement ausbilden, gegenseitig an einer relativen Bewegung zueinander in der Ausnehmung hindern. Das durch die Einzelteile einmal ausgebildete Anschlusselement lässt sich in seiner Gesamtheit nicht mehr aus der Ausnehmung des Aufnahmeelements entfernen.

Die Einzelteile können zu diesem Zweck gegenseitig eine Kraft aufeinander ausüben oder sich gegenseitig in ihrer Bewegungsfreiheit im Inneren der Ausnehmung einfach blockieren und dadurch das durch diese selbst gebildete Anschlusselement in der Ausnehmung verliersicher befestigen.

Mit anderen Worten, die Einzelteile des Anschlusselements einerseits und die Ausnehmung des Aufnahmeelements andererseits sind gemäß der Erfindung so gestaltet, dass sich die Einzeltteile nicht gleichzeitig aus der Ausnehmung entnehmen lassen, sondern die Einzelteile nur vereinzelt und nacheinander eingefügt bzw. herausgezogen werden können.

Die Ausnehmung in dem Aufnahmeelement, welches vorzugsweise einstückig mit dem Rahmen des Brillengestells verbunden ist, kann beispielsweise durch Fräsen hergestellt werden.

Gemäß der Erfindung weist die Ausnehmung zumindest einen Hinterschnitt auf, an dem zumindest ein Einzelteil des Anschlusselements im montierten Zustand zum Anliegen kommt. Der Hinterschnitt ist dabei dergestalt, dass sich das mit diesem zusammenwirkende Einzelteil nicht in Richtung zu dem Bügel aus der Ausnehmung heraus ziehen lässt.

Hierzu weist das Anschlusselement in einer bevorzugten Ausführungsform ein erstes Einzelteil und ein zweites Einzelteil auf, wobei das erste Einzelteil an seinem dem Bügel abgewandten Ende eine Form aufweist derart, dass dieses formkomplementär an dem Hinterschnitt der Ausnehmung des Aufnahmeelements zum Anliegen kommt, und wobei das zweite Einzelteil an seinem dem Bügel abgewandten Ende eine Form aufweist derart, dass dieses bei dessen Einfügen in die Ausnehmung des Aufnahmeelements das erste Einzelteil gegen den Hinterschnitt verspannt bzw. an diesen andrückt.

Der Hinterschnitt ist dabei in einer besonderen Ausführungsform als kontinuierlicher Verlauf, insbesondere keilförmig ausgebildet, wobei sich die Ausnehmung zumindest an einem seitlichen Rand ihrer zu dem Bügel zeigenden Öffnung in entgegengesetzter Richtung zu dem Bügel aufweitet.

In analoger Weise ist dann die Form des rahmenseitigen Endes des ersten Einzelteils ausgebildet, so dass ein formkomplementäres Anliegen ermöglicht wird, wobei neben dem dadurch erzwungenen Formschluss auch zusätzlich Kraftschluss die Verbindung bei in der Ausnehmung eingefügtem zweiten Einzelteil ausbilden kann.

Der Kraftschluss kann neben den Kräften, die die Einzelteile gegenseitig aufeinander ausüben, auch dadurch bewerkstelligt werden, dass die Ausnehmung gegenüber dem durch die Einzelteile zusammengefügten Anschlusselement solche Toleranzen in den Abmessungen aufweist, dass sich zwischen den Einzelteilen und damit dem Anschlusselement auf der einen Seite und der Ausnehmung des Aufnahmeelements auf der anderen Seite ein definierter Presssitz ausbilden kann.

In einer weiteren vorteilhaften Ausführungsform weist zumindest ein Einzelteil zusätzlich Fixierelemente auf, welche mit entsprechenden Öffnungen im Inneren der Ausnehmung des Aufnahmeelements kooperieren. Vorzugsweise handelt es sich hierbei um Klemm- oder Rastelemente in der Form von Nasen oder Stegen, welche entgegen der Einschiebrichtung ausgerichtet an dem Einzelteil vorgesehen sind, so dass Sie dem Herausziehen des Einzelteils einen Widerstand entgegen setzen, jedoch nicht dem Einfügen.

Vorzugsweise sind die Einzelteile des Anschlusselements, ebenso wie der Bügel des Brillengestells, aus einem flachen Metallblech mit einer definierten Blechdicke hergestellt. Die Ausnehmung in dem Aufnahmeelement weist dann eine entsprechende Breite quer zu dem Rahmen des Brillengestells auf.

In einer weiteren Ausführungsform, um aus Stabilitätsgründen das Anschlusselement einerseits verwindungssteif auszubilden und um andererseits ein das gegenseitige Verspannen der Einzelteile zur Befestigung des Anschlusselements unterstützende zusätzliche Maßnahme zur Verfügung zu stellen, weist der Ausnehmung des Aufnahmeelements gegenüberliegend ein Einzelteil zumindest eine Nase bzw. einen nasenartigen Vorsprung, der in Richtung auf das andere Einzelteil gerichtet ist, und das andere Einzelteil zumindest einen annähernd formkomplementären Freiraum bzw. eine Ausnehmung zur Aufnahme der Nase auf derart, dass die Einzelteile nicht relativ zueinander in Längsrichtung des Bügels bewegbar sind, wenn die Einzelteile in der Ausnehmung des Aufnahmeelements vollständig aufgenommen sind.

Beim Einfügen des zweiten Einzelteils in die Ausnehmung, in welcher das erste Einzelteil bereits eingefügt wurde, wird diese aus Nase und Freiraum gebildete Verbindung auf einfache Art und Weise dadurch umgangen, dass das erste Einzelteil und das zweite Einzelteil quer zueinander kurzzeitig verbogen werden, was auf Grund der Ausbildung aus Metallblech ohne Weiteres möglich ist.

Durch die beim Auseinanderbiegen erzeugte Federwirkung wird nach vollständiger Aufnahme des einen Einzelteils in der Ausnehmung des Aufnahmeelements dessen Nase in den Freiraum des anderen Einzelteils zurück bewegt, was die Verbindung zwischen den Einzelteilen stabilisiert und das Anschlusselement zur gelenkigen Anbindung des Bügels verwindungssteif ausbildet.

Der erfindungsgemäße Verbindungsmechanismus mit dem Anschlusselement und dem Aufnahmeelement gestattet es, dass das Material des Rahmens einerseits und das Material des Bügels und des Anschlusselements andererseits unterschiedlich gewählt sein können und nicht aufeinander abgestimmt werden müssen. Während der Bügel und das Anschlusselement aus Metall gefertigt sein können, kann der Rahmen des Brillengestells mit einstückig daran angeformten Aufnahmeelementen aus Hom oder Acetat gefertigt sein.

Um dem aus einem flachen Material hergestellten Anschlusselement eine ausreichende Stabilität zu verleihen, können in einer weiteren Ausführungsform des Brillengestells gemäß der Erfindung an dem zu dem Bügel gerichteten Ende des Aufnahmeelements vertikal verlaufende Nutabschnitte vorgesehen sein, in welche Abschnitte der Einzelteile des Anschlusselements zumindest teilweise aufnehmbar sind.

Der Bügel ist an dem Anschlusselement angelenkt, wobei vorzugsweise hierfür ein Gelenkmechanismus verwendet wird, der aus der vorhergehend bereits erwähnten Europäischen Patentschrift EP 0 863 424 B 1 bekannt ist, auf welche hiermit ausdrücklich Bezug genommen wird.

Hierzu weist das erste Einzelteil des Anschlusselements eine erste Aussparung und das zweite Einzelteil des Anschlusselements eine zweite Aussparung auf, die eine vertikal zur Richtung des ausgeklappten Bügels verlaufende Gelenkachse bilden. Das auf das Aufnahmeelement zulaufende Ende des Bügels unterteilt sich in drei zueinander parallele Blattfedern. Im montierten Zustand des Brillengestells bei ausgeklapptem Bügel liegt die mittlere Blattfeder mit ihrem freien Ende an der dem Gesicht des Brillenträgers abgewandten Fläche des aus den Einzelteilen im montierten Zustand gebildeten Anschlusselements an, wobei die äußeren Blattfedern in Richtung ihrer freien Enden zunächst an der dem Gesicht des Brillenträgers zugewandten Fläche des Anschlusselements anliegen, dann jeweils durch die senkrechten Aussparungen des Anschlusselements hindurchführen und schließlich an der dem Gesicht des Brillenträgers abgewandten Fläche des Anschlusselements zum Anliegen kommen. Idealerweise weisen die äußeren Blattfedern im Bereich ihrer freien Enden Biegungen auf, die ein Herausrutschen des Bügels aus dem Anschlusselement verhindern und den Bügel im zusammengeklappten Zustand des Brillengestells stabilisieren.

Die Erfindung soll nun anhand der in den beiliegenden Zeichnungen dargestellten Ausführungsbeispiele näher erläutert werden. Es zeigen:

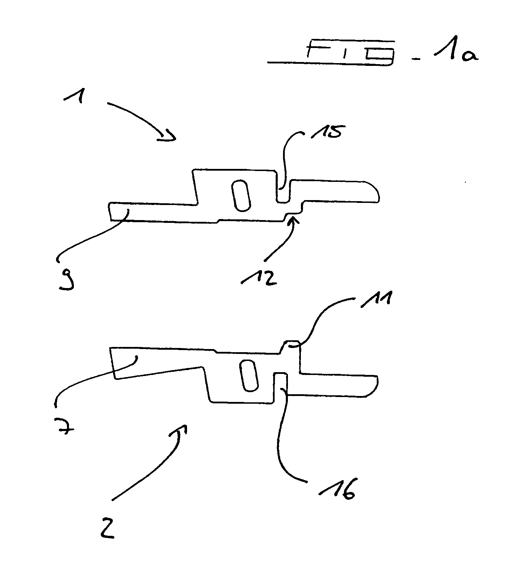

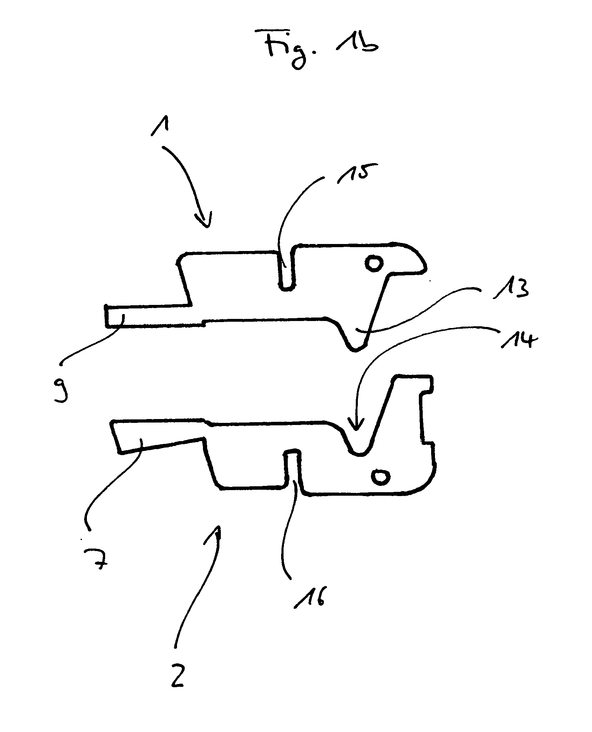

- Fig. 1 a: die Einzelteile des Anschlusselements gemäß der Erfindung in einer ersten Ausführungsform;
- Fig. 1 b: die Einzelteile des Anschlusselements gemäß der Erfindung in einer zweiten Ausführungsform;
- Fig. 2: in schematischer Explosionsansicht ausschnittsweise eine Seite eines Rahmens mit einem Aufnahmeelement und einem Anschlusselement;
- Fig.3: in schematischer Ansicht ausschnittsweise das Aufnahmeelement und das Anschlusselement aus Fig. 2 im montierten Zustand;
- Fig. 4: in schematischer Ansicht ausschnittsweise ein in dem montierten Anschlusselement gelenkig gelagertes Bügelende; und
- Fig. 5: exemplarisch die Einzelteile in einer weiteren Ausführungsform.

In den Fig. 1 a und 1 b sind exemplarisch die Bestandteile des Anschlusselements für die Lagerung eines Bügels an einen Rahmen eines Brillengestells gemäß der Erfindung gezeigt.

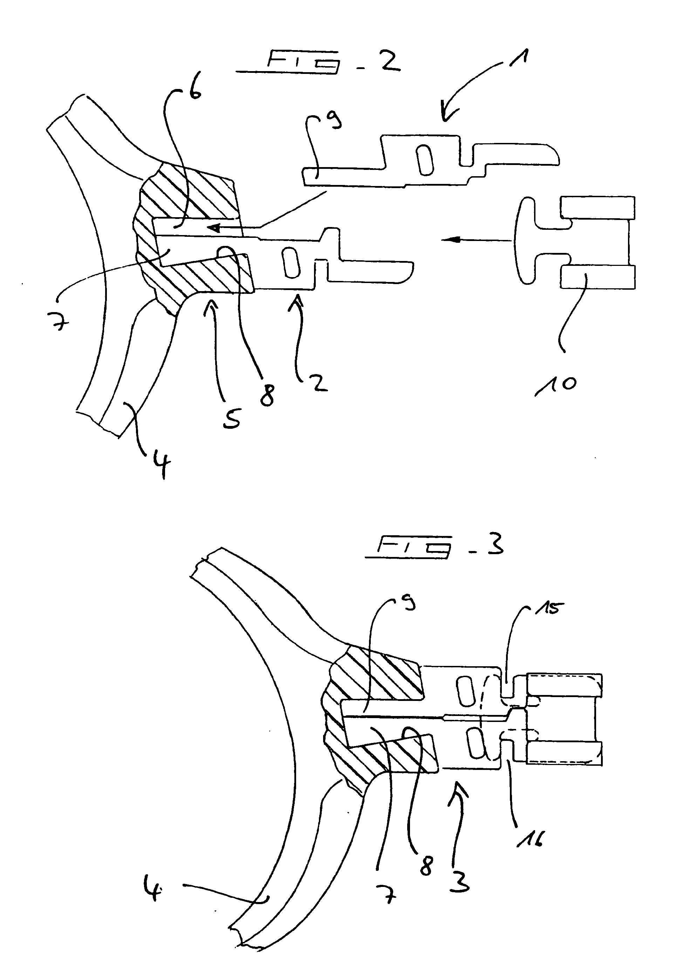

Das Anschlusselement in beiden Ausführungsformen besteht aus einem oberen Einzelteil 1 und einem unteren Einzelteil 2, welche zusammen im montierten Zustand das Anschlusselement 3 ausbilden, wie dies in den Figuren 2 und 3 zu erkennen ist.

In Fig. 2 ist ausschnittsweise eine Seite des erfindungsgemäßen Brillengestells gezeigt.

Das Brillengestell weist einen Rahmen 4 auf, an dessen Seiten jeweils ein blockförmiges Aufnahmeelement 5 einstückig angeformt ist.

Das Aufnahmeelement 5 ragt leicht geneigt von der Seite des Rahmens 4 ab und kann vorzugsweise prismenförmig ausgebildet sein.

Das Aufnahmeelement 5 weist eine Ausnehmung 6 auf, welche sich in Richtung zu einem hier nicht dargestellten Brillenbügel öffnet. Die Ausnehmung 6 kann beispielsweise durch Fräsen oder Gießen in dem Aufnahmeelement 5 ausgeformt werden.

Die Ausnehmung 6 dient der Aufnahme des Anschlusselements 3, das aus dem oberen Einzelteil 1 und dem unteren Einzelteil 2 gebildet ist.

Das untere Einzelteil 2 weist eine dem Bügel abgewandte Nase 8 auf, die sich keilförmig aufweitet. Um eine formkomplementäre Verbindung auszubilden, weist die Ausnehmung 6 in entsprechender Weise einen sich keilförmig aufweitenden unteren Rand 8 auf, der einen Hinterschnitt in der Ausnehmung 6, in Richtung zu dem Bügel gesehen, bildet. An diesem Rand 8 kommt die Nase 7 im montierten Zustand des Anschlusselements 3 zum Anliegen.

Wie in der Fig. 2 zu erkennen ist, wird zuerst das untere Einzelteil 2 in der Ausnehmung 6 aufgenommen. Danach, wird, wie die Fig. 3 zeigt, das obere Einzelteil 1 mit einer geradlinigen Nase 9 in die Ausnehmung 6 eingeschoben. Hierbei verspannt sich das obere Einzelteil 1 mit dem unteren Einzelteil 2 in der Ausnehmung 6, so dass das untere Einzelteil 2 an dem den Hinterschnitt bildenden Rand 8 dieser Ausnehmung 6 gehalten wird, was dazu führt, dass das Anschlusselement 3 insgesamt im Aufnahmeelement 5 des Rahmens 4 verliersicher befestigt ist.

Zur weiteren Stabilisierung kann auf die dem Rahmen 4 abgewandten Seite der Einzelteile 1 und 2 eine Manschette 10 aufgeschoben werden.

Das Anschlusselement 3 ist aus einem flachen Material, beispielsweise Metallblech, und vorzugsweise aus dem gleichen Material wie der Bügel hergestellt.

Eine die Halterung des Anschlusselements 6 unterstützende Verspannung zwischen dem oberen Einzelteil 1 und dem unteren Einzelteil 2 wird gemäß der Erfindung weiter dadurch bewerkstelligt, dass in einer Ausführungsform das untere Einzelteil 2 eine zu dem oberen Einzelteil 1 weisende Nase 11 aufweist, die in einer Ausnehmung 12 des oberen Einzelteils 1 aufgenommen ist (Fig. 1a), oder dass in einer anderen Ausführungsform das obere Einzelteil 1 eine zu dem unteren Einzelteil 2 weisende Nase 13 aufweist, die in einer Ausnehmung 14 des unteren Einzelteils 2 aufgenommen ist (Fig. 1 b).

In beiden Fällen bilden die aus Nasen 11 bzw. 13 und Ausnehmungen 12 bzw. 14 gebildeten Verbindungen, zusammen mit dem Hinterschnitt in der Ausnehmung 6 des Aufnahmeelements 5, einen Widerstand gegen ein Herausziehen der Einzelteile 1 und 2 in Richtung zu dem Bügel. Dies ist, ebenso wie das Einfügen der Einzelteile 1 und 2, gemäß der erfindungsgemäßen Ausgestaltung nur möglich, indem die Einzelteile 1 und 2, quer zu ihrer Längserstreckung beim Einschieben bzw. Herausziehen gegeneinander verbogen werden.

Wie in den Figuren 1 bis 4 zu erkennen ist, weist das obere Einzelteil 1 eine obere Aussparung 15 und in analoger Weise das untere Einzelteil 2 eine untere Aussparung 16 auf, welche vertikal fluchtend angeordnet sind, um eine Gelenkachse auszubilden.

Ein Bügel 17 weist wiederum an seinem zu dem Rahmen 4 gerichteten Ende drei zueinander parallele Blattfedern auf, eine mittlere Blattfeder 18 und zwei äußere Blattfedern 19 und 20.

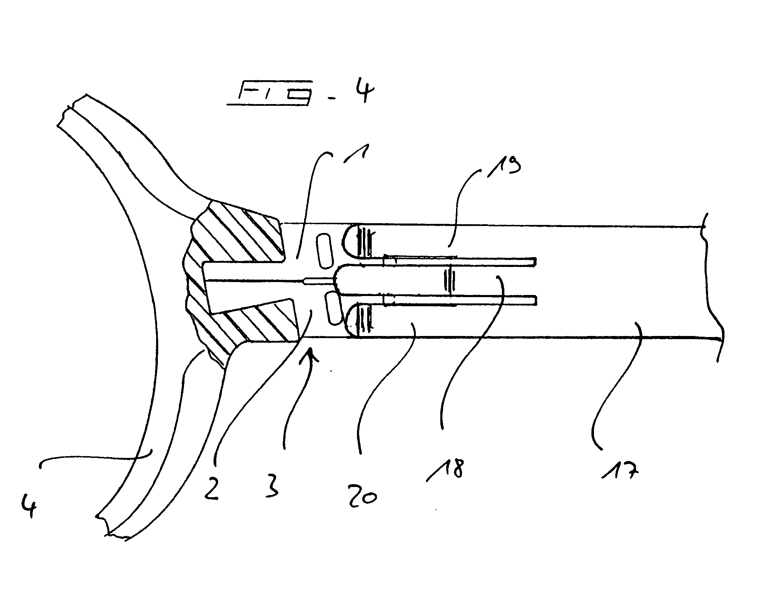

Wie in Fig. 4 zu erkennen ist, liegen die äußeren Blattfedern 19 und 20 an der dem Brillenträger zugewandten Fläche des aus den Einzelteilen 1 und 2 im montierten Zustand gebildeten Anschlusselements 3 an, durchgreifen dann die Aussparungen 15 und 16 und kommen an der dem Brillenträger abgewandten Fläche des Anschlusselements 3 zum Aufliegen, während die mittlere Blattfeder 18 auf der dem Brillenträger abgewandten Fläche des Anschlusselements 3 aufliegt.

Der Bügel 17 kann auf einfache Art und Weise geschwenkt werden, wobei die Aussparungen 15 und 16 die Gelenkachse bilden und die der dem Brillenträger abgewandte Fläche des Anschlusselements 3 als Widerlager für die mittlere Blattfeder 18 unter Ausbildung einer Federwirkung beim Schwenken dient.

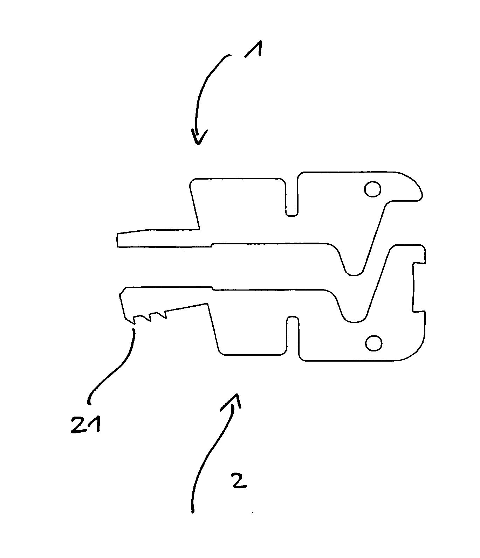

Fig. 5 zeigt die beiden Einzelteile in einer modifizierten Version. Dabei weist das untere Einzelteil 2 drei hintereinander angeordnete Nasen bzw. Haken 21 auf, die rückwärts gewandt, d.h. entgegen der Einschubrichtung ausgerichtet sind.

Diese Nasen 21 können mit entsprechenden Öffnungen in der Ausnehmung 6 des Aufnahmeelements 5 kooperieren, in welche diese im Wesentlichen formkomplementär eingreifen. Alternativ werden diese Nasen 21, welche eine wesentliche höhere Festigkeit als das Material des Ausnahmeelements 5 aufweise, auf einfache Art und Weise, wenn das Material des Aufnahmenelements 5 beispielsweise erwärmt ist, in dieses eingedrückt, gegebenenfalls unter Zuhilfenahme der durch das erste Einzelteil 1 bei der Montage ausgeübten Gegenkraft. Die Nasen 21 führen zu einer weiteren Stabilisierung des Anschlusselements 3 in dem Aufnahmeelement 5 und verhindern ein Herausziehen des Einzelteils 2.

## Patentansprüche

1. Brillengestell mit links und rechts je einem Bügel (17) und mit einem Rahmen (4), der links und rechts je ein Aufnahmeelement (5) zur Befestigung des Bügels (17) aufweist, wobei das Aufnahmeelement (5) eine in Richtung zu dem Bügel (17) sich öffnende Ausnehmung (6) aufweist, in die ein Anschlusselement (3) aufgenommen ist, dessen bügelseitiges Ende in Richtung des Bügels (17) im ausgeklappten Zustand weist und das im Vergleich zu der Länge des Bügels (17) relativ kurz ist und an welchem der Bügel (17) schwenkbar angelenkt ist, wobei das Anschlusselement (3) zumindest zwei Einzelteile (1,2) aufweist, die so ausgestaltet sind, dass diese im montierten Zustand unter Ausbildung des Anschlusselements (3) durch gegenseitiges Verspannen das Anschlusselement (3) in der Ausnehmung (6) des Aufnahmeelements (5) verliersicher halten, **dadurch gekennzeichnet, dass** die Ausnehmung (6) einen Hinterschnitt (8) aufweist, an dem zumindest ein Einzelteil (1,2) des Anschlusselements (3) im montierten Zustand zum Anliegen kommt.

2. Brillengestell nach Anspruch 1, bei welchem das Anschlusselement (3) ein erstes Einzelteil (2) und ein zweites Einzelteil (1) aufweist, wobei das erste Einzelteil (2) ein Ende (7) mit einer Form aufweist derart, dass dieses formkomplementär an dem Hinterschnitt (8) der Ausnehmung (6) zum Anliegen kommt, und wobei das zweite Einzelteil (1) ein Ende (9) mit einer Form aufweist derart, dass dieses bei dessen Einfügen in die Ausnehmung (6) das erste Einzelteil (2) gegen den Hinterschnitt (8) verspannt.

3. Brillengestell nach Anspruch 1 oder 2, bei welchem sich die Ausnehmung (6) zumindest an einem seitlichen Rand (8) ihrer zu dem Bügel (17) zeigenden Öffnung keilförmig in entgegengesetzter Richtung zu dem Bügel (17) aufweitet.

4. Brillengestell nach einem der vorhergehenden Ansprüche, bei welchem die Einzelteile (1,2) aus einem Material, insbesondere aus Metallblech, hergestellt sind, welches quer zu deren Erstreckung in der Längsrichtung des Bügels (17) eine sehr geringe Materialdicke aufweist.

5. Brillengestell nach Anspruch 4, bei welchem der Ausnehmung (6) des Aufnahmeelements (5) gegenüberliegend ein Einzelteil (1 ;2) zumindest eine Nase (11;13) und das andere Einzelteil (2;1) zumindest eine Ausnehmung (12:14) zur Aufnahme der Nase (11;13) aufweist derart, dass die Einzelteile (1;2) nicht relativ zueinander in Längsrichtung des Bügels (17) bewegbar sind.

6. Brillengestell nach einem der vorhergehenden Ansprüche, bei welchem die Enden (7,9) der Einzelteile (1,2) mit der Ausnehmung (6) des Aufnahmeelements (5) einen Presssitz ausbilden.

7. Brillengestell nach einem der vorhergehenden Ansprüche, bei welchem zumindest eines der Einzelteilen (1,2) zusätzliche Fixierelemente (21) aufweist, die ein Herausziehen des Einzelteils (1,2) aus der Ausnehmung (6) verhindern.

8. Brillengestell nach einem der vorhergehenden Ansprüche, bei welchem das erste Einzelteil (2) eine erste Aussparung (16) und das zweite Einzelteil (2) eine zweite Aussparung (15) aufweist, die eine vertikal zur Richtung des ausgeklappten Bügels (17) verlaufende Gelenkachse bilden.

9. Brillengestell nach Anspruch 8, bei welchem das fassungsseitige Ende des Bügels (17) in drei zueinander parallele Blattfedern (18,19,20) aufgeteilt ist, wobei bei ausgeklapptem Bügel (17) eine mittlere Blattfeder (18) mit ihrem freien Ende an der dem Gesicht des Brillenträgers abgewandten Fläche des aus dem ersten Einzelteil (2) und dem zweiten Einzelteil (1) gebildeten Anschlusselements (3) anliegt und die beiden äußeren Blattfedern (19,20) in Richtung ihrer freien Enden zunächst an der dem Gesicht des Brillenträgers zugewandten Fläche des Anschlusselements (3) anliegen, dann jeweils durch die vertikalen Aussparungen (15,16) der Einzelteile (1,2) hindurchführen und schließlich an der dem Gesicht des Brillenträgers abgewandten Fläche des Anschlusselements (3) zum Anliegen kommen.

10. Brillengestell nach einem der vorhergehenden Ansprüche, bei welchem auf das Anschlusselement (3) eine Manschette (10) aufschiebbar ist.

11. Brillengestell nach einem der vorhergehenden Ansprüche, bei welchem das Aufnahmeelement (5) einstückig mit dem Rahmen (4) ausgebildet ist.

## Claims

1. Spectacle frame having a temple (17) each on the left and the right and having a frame (4) comprising a receiving element (5) each on the left and right for attaching the temple (17), wherein the receiving element (5) comprises a recess (6) opening in the direction towards the temple (17), a connecting element (3) being received in said recess, the temple-side end of which points in the direction of the temple (17) in an unfolded state and which end is relatively short compared to the length of the temple (17) and to which the temple (17) is pivotably hinged, wherein the connecting element (3) comprises at least two individual components (1; 2) designed in such a way that these, in the assembled state and forming the connecting element (3), securely hold the connecting element (3) against loss in the recess (6) of the receiving element (5) by mutually tensioning, **characterized in that** the recess (6) comprises an undercut (8) against which, when assembled, at least one component (1; 2) of the connecting element (3) abuts.

2. Spectacle frame according to claim 1, in which the connecting element (3) comprises a first component (2) and a second component (1), wherein the first component (2) comprises an end (7) with a shape which is formed in such a way that it abuts against the undercut (8) of the recess (6) in a form-complementary manner, and wherein, the second component (1) comprises an end (9) with a shape which is formed in such a way that, upon its insertion into the recess (6), it applies tension to the first component (2) against the undercut (8).

3. Spectacle frame according to claims 1 or 2, in which the recess (6) widens in a wedge-shaped manner in the opposite direction to the temple (17), on at least one side edge (8) of its opening pointing towards the temple (17).

4. Spectacle frame according to one of the preceding claims, in which the components (1; 2) are made from a material, especially a flat metal sheet, which traverse to its length in the longitudinal direction of the temple (17) comprises a very narrow material width.

5. Spectacle frame according to claim 4, in which opposite to the recess (6) of the receiving element (5) one component (1; 2) comprises at least a nose (11; 13) and the other component (2; 1), comprises at least a recess (12; 14) for receiving the nose (11; 13) designed in such a way that the components (1; 2) are not movable relative to each other in the longitudinal direction of the temple (17).

6. Spectacle frame according to one of the preceding claims, in which the ends (7; 9) of the components (1; 2) form a press fit with the recess (6) of the receiving element (5).

7. Spectacle frame according to one of the preceding claims, in which at least one of the two components (1; 2) comprises additional fixing elements (21) which prevent the components (1; 2) from being extracted from the recess (6).

8. Spectacle frame according to one of the preceding claims, in which the first component (2) comprises a first recess (16) and the second component (1) comprises a second recess (15) which are arranged in a vertical joint axis to the direction of the unfolded temple (17).

9. Spectacle frame according to claim 8, in which the frame-side end of the temple (17) is divided up into three leaf springs (18; 19; 20) parallel to each other, wherein, with the temple (17) being unfolded, the end of the central leaf spring (18) resting against surface of the connecting element (3) consisting of the first component (2) and the second component (1), which surface is facing away from the face of the person wearing the spectacles, the two outer leaf springs (19; 20), in the direction of the three ends thereof, first resting against the surface of the connecting element (3) facing the face of the person wearing the spectacles then each passing through the vertical recesses (15; 16) of the components (1; 2) and finally coming to rest against the surface of the connecting element (3) facing away from the person wearing the spectacles.

10. Spectacle frame according to one of the preceding claims, in which a sleeve (10) can be slid onto the connecting element (3).

11. Spectacle frame according to one of the preceding claims, in which the receiving element (5) is formed integrally with the frame (4).

## Revendications

1. Monture de lunettes comprenant une branche (17) respectivement située à gauche et à droite, et un châssis (4) présentant, à gauche et à droite, un élément respectif de réception (5) dédié à la fixation de ladite branche (17), ledit élément de réception (5) comportant un évidement (6) s'ouvrant en direction de la branche (17), et dans lequel est logé un élément de rattachement (3) dont l'extrémité, située côté branche, pointe en direction de ladite branche (17) à l'état déployé par pivotement, qui est relativement court comparé à la longueur de ladite branche (17), et sur lequel ladite branche (17) est articulée à pivotement, ledit élément de rattachement (3) comptant au moins deux parties individuelles (1; 2) réalisées de façon à retenir, à l'état monté, l'élément de rattachement (3) de manière imperdable dans l'évidement (6) de l'élément de réception (5), par blocage réciproque, en formant alors ledit élément de rattachement (3), **caractérisée par le fait que** l'évidement (6) présente une dépouille (8) contre laquelle au moins une partie individuelle (1; 2) de l'élément de rattachement (3) vient en applique à l'état monté.

2. Monture de lunettes selon la revendication 1, dans laquelle l'élément de rattachement (3) comprend une première partie individuelle (2) et une seconde partie individuelle (1), ladite première partie individuelle (2) présentant une extrémité (7) dotée d'une configuration telle qu'elle vienne en applique, par complémentarité de formes, contre la dépouille (8) de l'évidement (6); et ladite seconde partie individuelle (1) offrant une extrémité (9) pourvue d'une configuration telle qu'elle bloque ladite première partie individuelle (2), contre ladite dépouille (8), lorsque ladite seconde partie pénètre dans ledit évidement (6).

3. Monture de lunettes selon la revendication 1 ou 2, dans laquelle l'évidement (6) est muni, au moins sur un bord latéral (8) de son ouverture pointant vers la branche (17), d'un évasement cunéiforme dans la direction opposée à ladite branche (17).

4. Monture de lunettes selon l'une des revendications précédentes, dans laquelle les parties individuelles (1; 2) sont fabriquées en un matériau, notamment en tôle métallique présentant une très faible épaisseur, dans le sens transversal, par rapport à l'étendue desdites parties dans la direction longitudinale de la branche (17).

5. Monture de lunettes selon la revendication 4, dans laquelle, à l'opposé de l'évidement (6) de l'élément de réception (5), une partie individuelle (1; 2) présente au moins un bec (11; 13) et l'autre partie individuelle (2; 1) est pourvue d'au moins un évidement (12; 14) destiné à recevoir ledit bec (11; 13), de telle sorte que lesdites parties individuelles (1; 2) ne puissent pas se mouvoir l'une vis-à-vis de l'autre dans la direction longitudinale de la branche (17).

6. Monture de lunettes selon l'une des revendications précédentes, dans laquelle les extrémités (7; 9) des parties individuelles (1; 2) instaurent un ajustement serré avec l'évidement (6) de l'élément de réception (5).

7. Monture de lunettes selon l'une des revendications précédentes, dans laquelle au moins l'une des parties individuelles (1; 2) comporte des éléments additionnels (21) de consignation à demeure, qui empêchent ladite partie individuelle (1; 2) de se déboîter de l'évidement (6).

8. Monture de lunettes selon l'une des revendications précédentes, dans laquelle la première partie individuelle (2) comporte une première échancrure (16) et la seconde partie individuelle (1) présente une seconde échancrure (15), ces dernières formant un axe d'articulation qui s'étend verticalement par rapport à la direction de la branche (17) déployée par pivotement.

9. Monture de lunettes selon la revendication 8, dans laquelle l'extrémité de la branche (17), située côté châssis, est subdivisée en trois lames de ressort (18, 19, 20) parallèles les unes aux autres, sachant que, lorsque ladite branche (17) est à l'état déployé par pivotement, une lame de ressort (18) centrale est en applique par son extrémité libre contre la surface, tournée à l'opposé du visage du porteur des lunettes, de l'élément de rattachement (3) formé de la première partie individuelle (2) et de la seconde partie individuelle (1); et les deux lames de ressort (19; 20) extérieures sont tout d'abord en applique, dans la direction de leurs extrémités libres, contre la surface dudit élément de rattachement (3) qui est tournée vers le visage dudit porteur des lunettes, franchissent ensuite, d'un trait, les échancrures verticales respectives (15; 16) desdites parties individuelles (1; 2) et viennent s'appliquer, pour finir, contre ladite surface dudit élément de rattachement (3) qui est tournée à l'opposé du visage dudit porteur des lunettes.

10. Monture de lunettes selon l'une des revendications précédentes, dans laquelle une manchette (10) peut être enfilée sur l'élément de rattachement (3).

11. Monture de lunettes selon l'une des revendications précédentes, dans laquelle l'élément de réception (5) est ménagé d'un seul tenant avec le châssis (4).
